# EUROPEAN PATENT SPECIFICATION

(11) **EP 2 437 204 B1**
(45) Date of publication and mention of the grant of the patent: **18.03.2015**
(21) Application number: 11250587.0
(22) Date of filing: 09.06.2011
(51) Int. Cl.: G06K 19/077, D06H 1/00, G01V 15/00, H01Q 1/22

(54) **Radio frequency identification (RFID) tag**
Funk-Identifikationsetikett (RFID)
Étiquette d'identification de fréquence radio (RFID)

(30) Priority: 15.06.2010 US 354758 P
(43) Date of publication of application: 04.04.2012
(73) Proprietor: Convergence Systems Limited, Hong Kong (CN)
(72) Inventor: Lai, Kin Yue Albert, Hong Kong (CN); Garrett, Jerry, Hong Kong (CN); Chan, Yi Wah, Hong Kong (CN)
(74) Representative: Stevenson-Hill, Jack Patrick

(56) References cited:
- DE-A1- 19 709 364
- DE-A1-102006 043 021
- DE-A1-102006 044 881
- US-A- 5 906 004
- US-A- 6 050 622
- US-A- 6 088 230
- US-A1- 2003 160 732
- US-A1- 2005 161 501
- US-A1- 2007 125 867
- US-B1- 6 888 241

## Description

This invention relates to a radio frequency identification (RFID) tag and various applications of such an RFID tag.

With the rapid popularity of RFID technology in many industries, its use in the apparel industry is becoming more prominent. Currently, RFID tags are mostly attached to price tags, which may be mounted either at the retail shop, or at the distribution center of the retail shop, or even at the factory. The purpose of RFID tags as attached to the price tags of apparel is mainly for logistics and price management. Often, the RFID tag is used for anti-theft purposes.

An additional purpose that is just becoming a requirement is for anti-counterfeiting purpose. For expensive branded clothing or bags, the need for anti-counterfeiting is of utmost importance. This application of RFID technology is to protect intellectual property rights of the brand and to insure authentication. In this application, just applying an RFID tag to a price tag is not sufficient, as the price tag is a separate item and can be easily counterfeited. The RFID tag must be hidden inside the bag or clothing or made difficult to access.

Another problem of apparel is the process of washing and the need to sort out the ownership of each piece of clothing after the washing cycle. This is particularly important for management of uniforms of hotels, schools, police, military, costumes and etc.

US Patent Application Publication No. US 2003/0160732 A1 discloses a method and system for providing RFID transponder having a fabric antenna. The system includes a radio frequency (RF) transponder, the transponder having a housing, an RF circuit enclosed in the housing, and a fabric antenna coupled to the RF circuit. The method of fabricating a radio frequency (RF) transponder includes the steps of enclosing an RF circuit in a housing, forming a fabric antenna and coupling the fabric antenna to the RF circuit.

German Patent Application Publication No. DE 10 2006 044 881 A1 discloses a portable data carrier with an electronic circuit for storing and/or processing of data and an antenna arrangement having a plurality of antenna means for contactless energy and/or data transmission, in which the contribution of at least one of the antenna means to the effect of the antenna arrangement by means of a switching means is variable. The portable data carrier is characterized in that at least two antenna means is connected in series relative to the electronic circuit and their contributions to the effect of the antenna assembly are opposite to each other and the portable data carrier may be switched between a state in which power and/or data transmission via the antenna assembly is carried out, and a state in which no power and/or data transmission can be performed via the antenna assembly.

US Patent No. 6,088,230 discloses a procedure for producing a transponder unit provided with at least one chip and one coil, and in particular a chip card/chip-mounting board wherein the chip and the coil are mounted on one common substrate and the coil is formed by installing a coil wire and connecting the coil wire ends to the contact surfaces of the chip on the substrate.

US Patent No. 6,050,622 discloses a safety sealing device including a support. An electronic safety circuit is glued to one face of the support. The electronic safety circuit includes a winding of fine wire connected to an electronic component. The electronic component is activated and interrogated by outside checking means via the winding, which acts as an antenna. The electronic component may be coded so that it responds to the interrogation with its code. The safety sealing device may further comprise differentiated gluing means. When attempting to tamper with the support to which the safety circuit has been glued in order to unseal a receiving article, the attempt at ungluing or a tearing causes a break in the continuity of the electronic circuit. As a result, the electronic component no longer responds to an interrogation with its code, thus assuredly indicating that the safety sealing device has been tampered with.

US Patent Application Publication No. 2007/0125867 discloses a tamper evident RFID circuit using a fold section that forms a capacitive element when folded together.

US Patent No. 6,888,241 discloses a system for sealing, comprising a first capsule, a second capsule, electronic means, for placing in at least one of the capsules, and capable of containing an electronic identity that is remotely interrogatable, and closure means to seal the two capsules together.

German Patent Application Publication No. DE 197 09 364 A1 discloses a transponder for a seal for a housing in two parts, in which the sealing bridges a housing for e.g. a measuring, storing or display apparatus. A transponder is provided which is installed in one of the screw fixing holes between housing elements. The transponder contains an identity code and is embedded in a sealing material. If illegally tampered the transponder is damaged and the code destroyed. The code is stored within a memory in the equipment and is checked against the transponder.

German Patent Application Publication DE 10 2006 043 021 A1 discloses a data storage medium with a transponder and a security filament, band or strip, which is preferably in the form of a window filament, an interrupt section of the transponder antenna, which may be in the form of a multi-turn antenna coil, is completed by a separate conductor bridge, the conductor bridge being formed by the security filament. In the case of a multi-turn antenna coil and a window filament, windows in the window filament which are spaced apart from one another form separate contact areas for ends of the antenna coil which adjoin the interrupt section.

US Patent No. 5,906,004 discloses a textile fabric including a plurality of electrically conductive fibers characterized as providing sufficient current to induce either a wired or wireless coupling between the textile fabric and a portable electronic device. The textile fabric is intended for fabrication into a functional article of clothing or other item made of the woven textile fabric, so as to increase functionality of the article of clothing or item made thereof. The plurality of electrically conductive fibers are characterized as creating an interconnect to a portable electronic device, including integrated components, electronics, or the like, or serving as an antenna for signals received and transmitted by the portable electronic device.

US Patent Application Publication No. 2005/0161501 A1 discloses a sheet-shaped value document, such as a bank note. An authenticity feature which can be reliably verified by machine or by humans and which can moreover not be deceptively imitated by copying technology is realized by an electro-optical and/or acoustic display device integrated in the value document.

It is thus an objective of the present invention to provide a novel method of attaching an RFID tag to an object, in which the aforesaid shortcomings can be mitigated.

According to the present invention, there is provided a method as defined by claim 1.

Preferred embodiments of the present invention will now be described, by way of example only, with reference to the accompanying drawings, in which:
Figs. 1A to 1E show various objects into or onto which an FRID tag may be embedded or fixedly secured;
Fig. 2 shows an RFID tag sewn in a piece of cloth;
Fig. 3 shows an RFID tag with its centre part mounted on a piece of FR4 printed circuit board;
Fig. 4 shows an RFID tag with its centre part mounted on a piece of inlay;
Fig. 5 shows an RFID tag with its centre part on a piece of cloth;
Fig. 6 shows a clothing item, being a shirt, sewn with three RFID tags;
Fig. 7 shows an RFID tag with two dipoles;
Fig. 8 shows an RFID tag with a loop style antenna;
Figs. 9A and 9B show a number of metalized threads of various diameters, which may used in an RFID tag;
Fig. 10 shows an RFID tag connected with and powered by a thin film battery;
Fig. 11 shows an RFID tag with its centre part covered with plastic to improve or achieve water-proofing;
Fig. 12 shows an RFID tag with its centre part covered by a piece of cloth;
Fig. 13 shows an RFID tag attached to a clothing item and a label of the clothing item;
Fig. 14 shows an RFID tag connected with metalized threads of different colours;
Fig. 15 shows an RFID tag with a metalized thread received through a ring;
Fig. 16 shows an RFID tag wound around a cow;
Fig. 17 shows an RFID tag attached to an earlobe of a cow;
Fig. 18 shows an RFID tag attached to a document as a tamper-destruct seal;
Fig. 19 shows an RFID tag forming part of a container cover as a tamper-destruct seal for the container;
Fig. 20 shows an RFID tag attached to a shoe lace of a shoe; and
Fig. 21 shows an RFID tag weaved into a bag or sack.

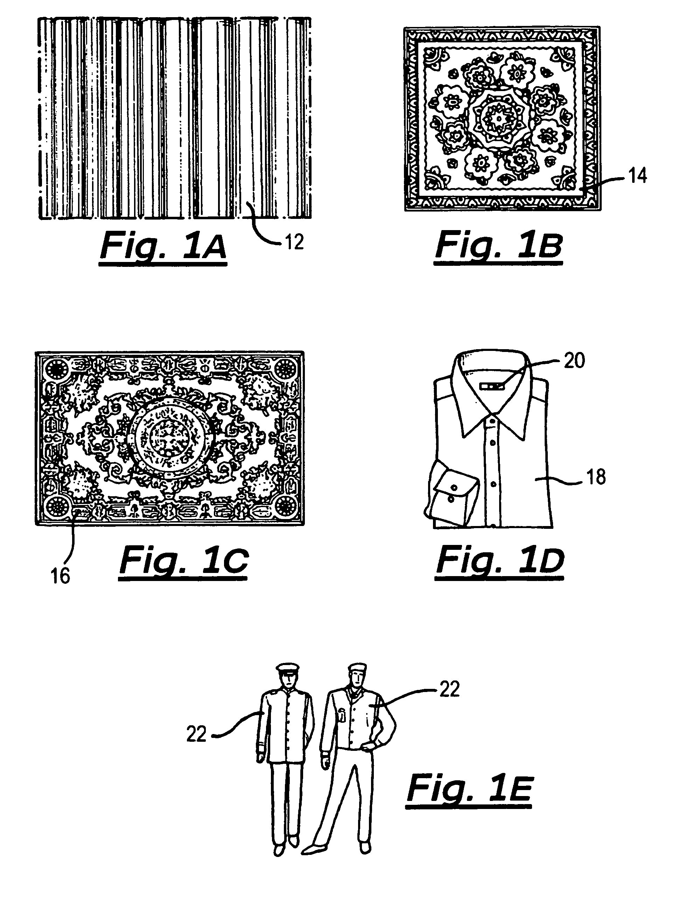

Figs. 1A to 1E show various objects into or onto which a radio frequency identification (RFID) tag may be secured. Fig. 1A shows a piece of cloth 12 onto which such an RFID tag may be secured; Fig. 1B shows a table cloth 14 onto which such an RFID tag may be secured; Fig. 1C shows a carpet 16 onto which such an RFID tag may be secured; Fig. 1D shows a shirt 18 onto whose label 20 such an RFID tag may be secured; and Fig. 1E shows uniforms 22 onto or into which such an RFID tag may be secured. The RFID tag may also be sewn onto leather or other wearable materials.

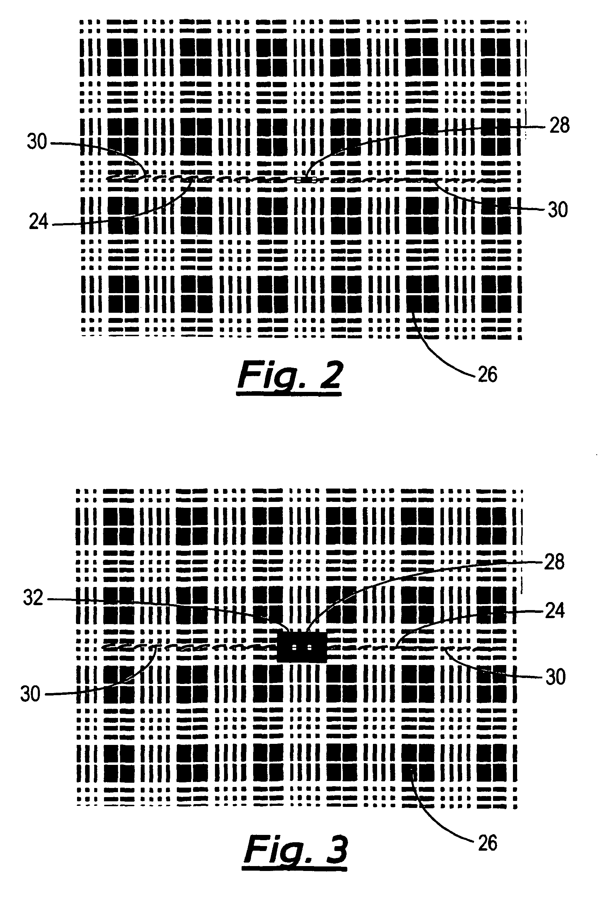

An RFID tag 24 is shown in Fig. 2 as sewn onto a piece of cloth 26. The tag 24 is shown here as a passive RFID tag, although it should be understood that such may be a battery assisted passive RFID tag or an active RFID tag. The RFID tag 24 includes a flip chip integrated circuit (IC) 28 electrically connected with a pair of metalized threads 30, each forming an antenna of the RFID tag 24. The metalized threads 30 are normal threads, which may be made of cotton or polyester, totally recyclable, with metallization on the surface of the threads 30 or integrated into the threads 30. The threads 30 may be fully metalized or partly metalized with an electrically conductive metal, so as to render the threads 30 electrically conductive. Both fully metalized and partly metalized threads will be herein collectively referred to as "metalized threads". The metalized threads 30 are applied to the piece of cloth 26 by a sewing machine. The IC 28 may first be mounted on another substrate and then also sewn onto the piece of cloth 26. Alternatively, the IC 28 may be sewn onto the clothing label, or to the clothing.

Fig. 3 shows the RFID tag 24 with its centre part (meaning the IC 28 and part of each of the two metalized thread antennas 30 connected with and closest to the IC 28) mounted on a piece of FR4 printed circuit board (PCB) with a plurality of metalized holes. The antennas 30 are received through and connected with a respective of the metalized holes. The threads 30 are in then sewn onto the piece of cloth 26. The flip chip IC 28 is covered with glue to make it waterproof and to give it structural strength so that it will less likely be loosened out when under mechanical stress.

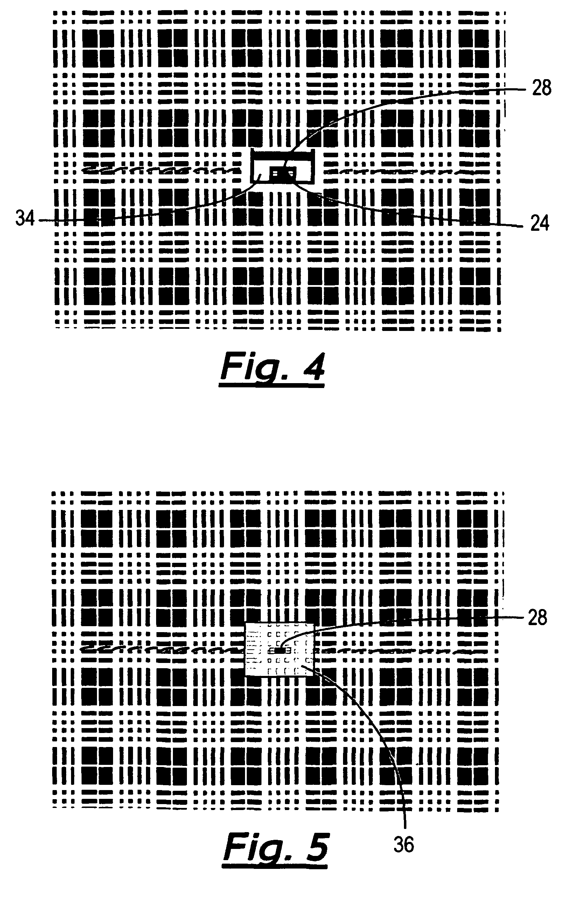

Fig. 4 shows the RFID tag 24 with its IC 28 mounted on a piece of plastic inlay 34. In a further possible arrangement, and as shown in Fig. 5, the flip chip IC 28 is mounted on a piece of cloth 36.

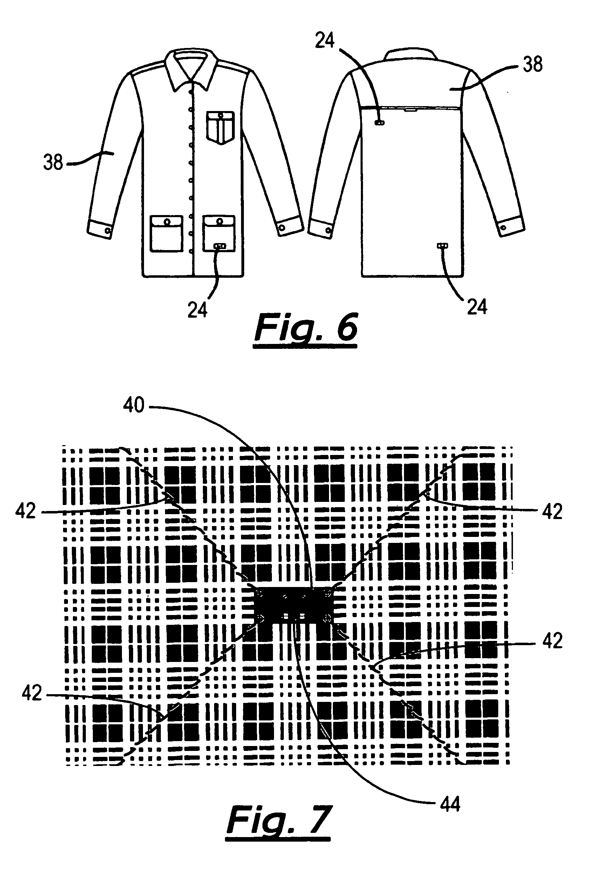

Although each object (be it a piece of cloth, a clothing item, or the like) may be associated with one RFID tag 24 only, it is of course possible to have more than one RFID tag 24 attached to an object. For example, and as shown in Fig. 6, three RFID tags 24 are sewn onto three different parts of a shirt 38 to provide redundancy of reading capacity, so that even if one or more of the RFID tags 24 is blocked or destroyed or in any way incapable of functioning properly, the remaining RFID tag(s) 24 can still respond to a reader request.

Fig. 7 shows another RFID tag 40 with two pairs of metalized thread antennas 42 electrically connected to a central flip chip IC 44, to provide antenna diversity so that reader signals coming in at different polarization can still be read.

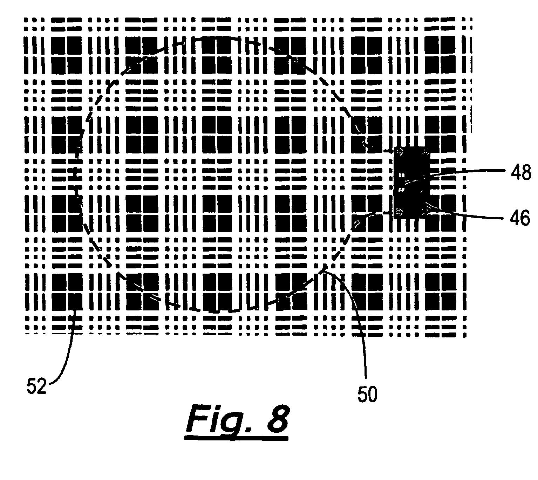

Fig. 8 shows another RFID tag 46 with a flip chip IC 48 electrically connected to a loop style antenna made of a metalized thread 50. By way of such an arrangement, the RFID tag 46 can be read by a near field antenna based RFID reader, even if the whole piece of clothing or cloth (of which a part 52 is shown) is inside water or close to metal or close to human flesh.

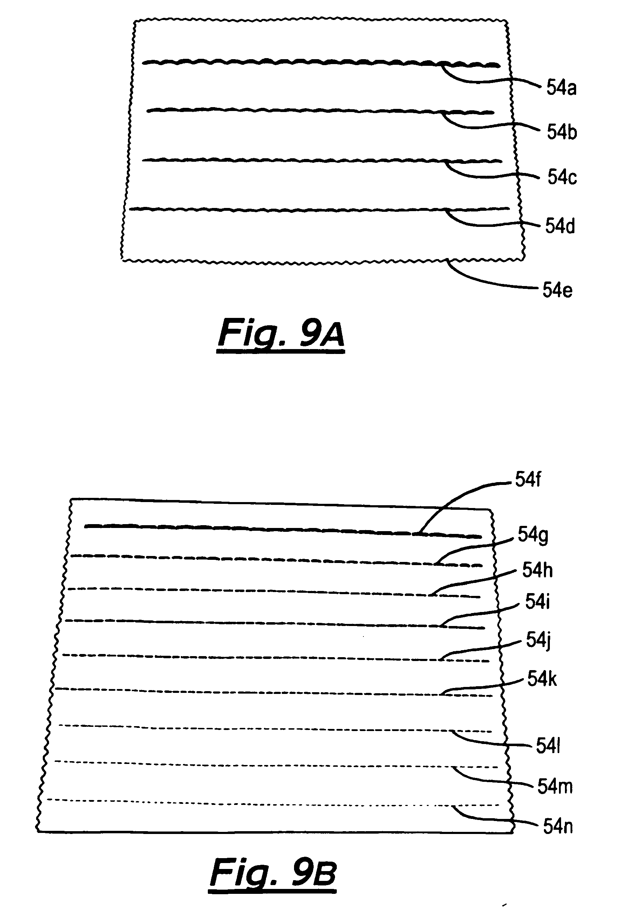

As shown in Figs. 9A and 9B, metalized threads 54a, 54b, 54c, 54d, 54e, 54f, 54g, 54h, 54i, 54j, 54k, 541, 54m, 54n for forming antennas of RFID tags may be of various diameters (as shown in Figs. 9A and 9B) so as to provide various degrees of sensitivity to the RFID tags.

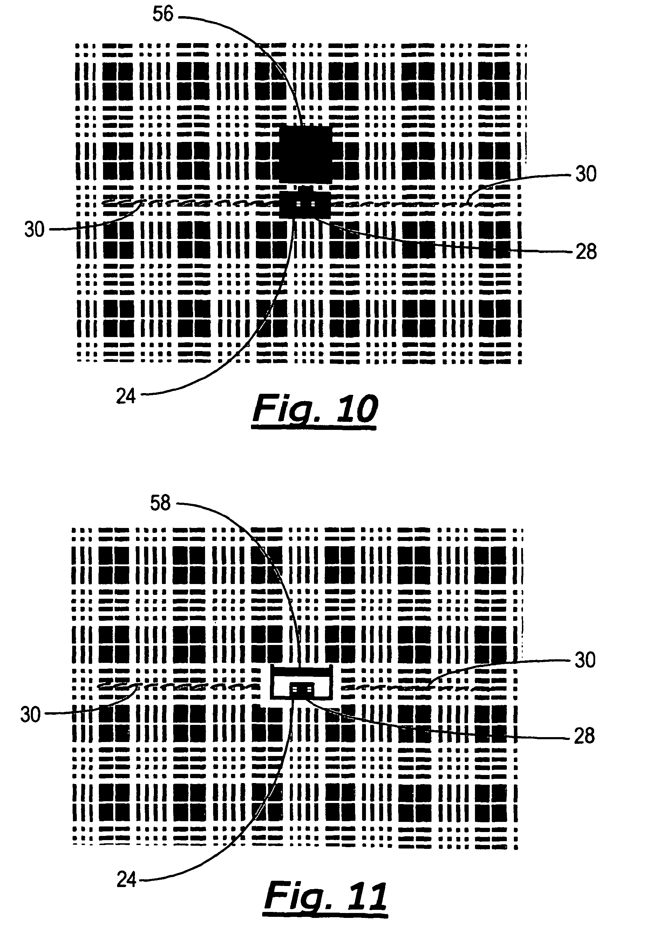

The RFID tags so far discussed are passive RFID tags. As mentioned above, RFID tags may be battery assisted passive RFID tags or active RFID tags. As shown in Fig. 10, the RFID tag 24 with an IC 28 attached with two metalized thread antennas 30 is connected with and powered by a thin film battery 56. The thin film battery 56 is mounted on a piece of cloth or paper, and is then sewn to the object (e.g. a clothing item) to which the RFID tag 24 is to be sewn. This enables the RFID tag 24 to behave as a battery assisted tag, thus allowing ultra long read range.

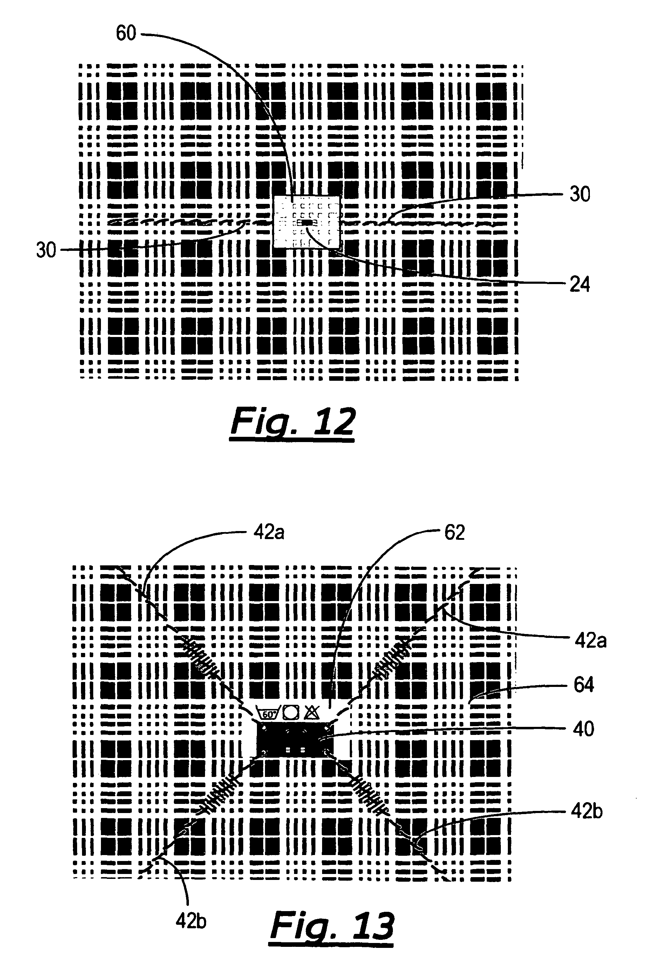

As shown in Fig. 11, the RFID tag 24 with a central IC 28 attached with two metalized thread antennas 30 is covered by a piece of malleable conformable plastic material to achieve or improve waterproofing. In addition or as an alternative to being covered by a piece of plastic material, and as shown in Fig. 12. a further piece of cloth 60 may be sewn onto the object to cover the centre part of the RFID tag 24, i.e. the flip chip IC 28 and the part of the metalized thread antennas 30 which are close and connected to the flip chip IC 28.

As shown in Fig. 13, for an RFID tag 40 with two pairs of metalized thread antennas 42a, 42b electrically connected with a central IC, a part of each of the antennas 42a is sewn onto a label 62 of a piece of clothing 64 and a part of each of the antennas 42a is sewn onto the piece of clothing 64. This allows a larger antenna for best read range.

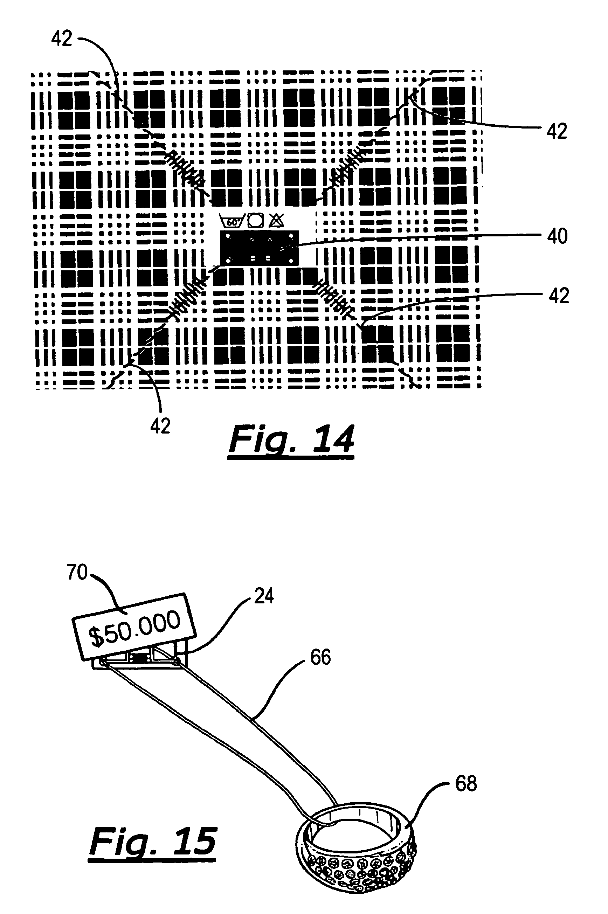

As shown in Fig. 14, for an RFID tag 40 with a number of metalized thread antennas 42 connected with a central IC, the antennas 42 may be of different colours, so as to guide the user to use a pair of scissors to cut the proper thread (which may, for example, be of a colour different from that of all other threads) to permanently terminate the operation of the RFID tag 40.

Metalized thread based RFID tags have many applications, including the application onto price tags of such jewellery items as gold or jewel rings and watches and other valuable goods in retail shops. As shown in Fig. 15, an RFID tag 24 is attached to a ring 68 by having its loop style metalized thread antenna 66 received through the ring 68. A price tag 70 is attached (e.g. glued) onto the IC of the RFID tag 24. The thread antenna 66 may be fully metalized or partly metalized to obtain different antenna effects.

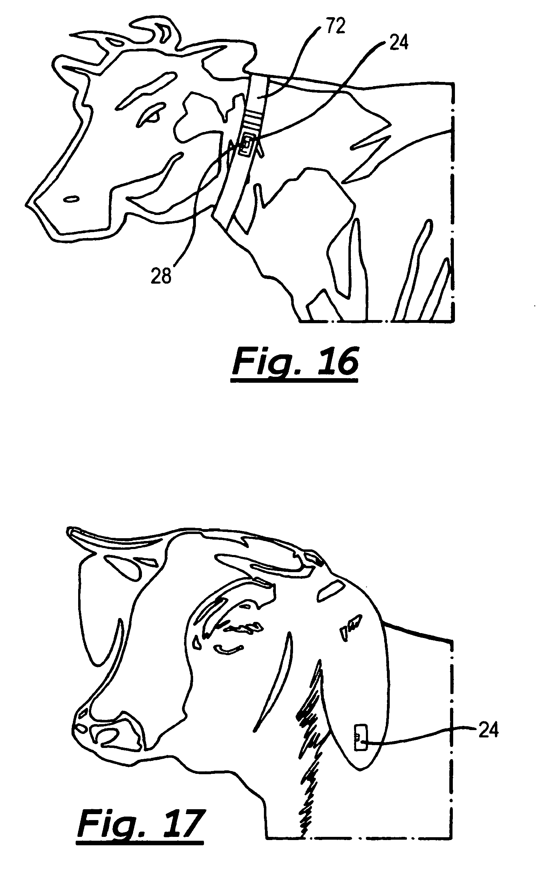

As shown in Fig. 16, a metalized thread based RFID tag 24 is shown as being applied to a string or woven collar 72 worn around the neck of a cow. The string or woven collar 72 may be worn around body parts of various other animals, e.g. dogs, cats, or other pets, with the string or woven collar selectively metalized with the proper length according to RF requirements, so as to act as an antenna. A cloth or paper based card may be provided to house the flip chip IC 28. It is found in practice that if the string or woven collar is partially metalized, the read range of the RFID tag 24 (when mounted on the animal) can be maximized.

As shown in Fig. 17, a metalized thread 30 attached to a central IC of an RFID tag 24 can also be directly sewn into a body part of an animal or livestock, such as an earlobe of a cow, or a fin of a fish, and the antenna design can be optimized for the animal body such that the read range can be relatively good. The RFID tag 24 is thereby attached to the animal.

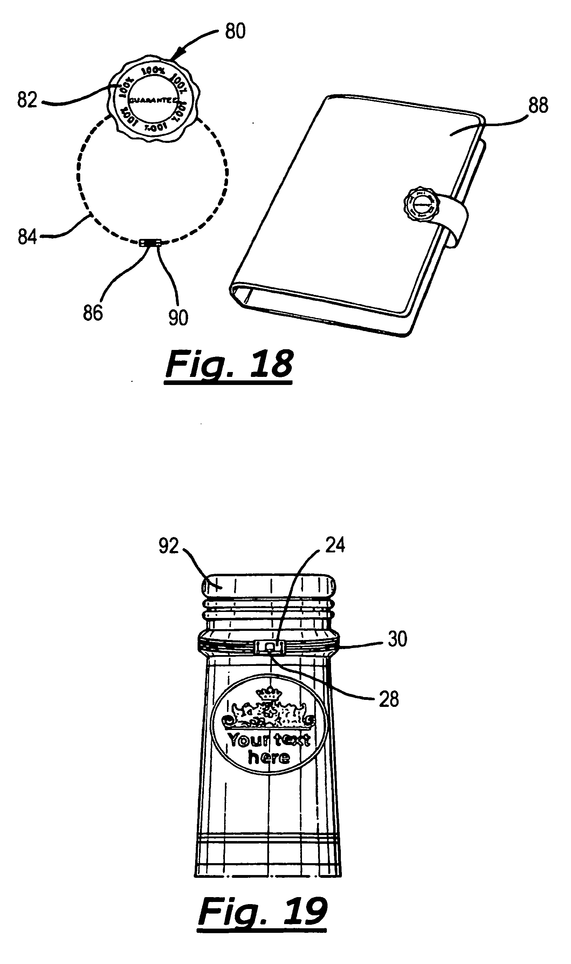

According to the present invention, metalized thread based RFID tags can be used as tamper-destruct seals for legal documents. A tamper-destruct seal for legal documents is shown in Fig. 18 and generally designated as 80, including a seal 82, a metalized thread antenna 84 and an RFID IC 86 connected with one another. The metalized thread antenna 84 and the IC 86 form an RFID tag 90. A legal document 88 is also shown in Fig. 18 as being protected by the tamper-destruct seal 80. In particular, the tamper-destruct seal 80 is associated with the legal document 88 by having its metalized thread antenna 84 positioned through one or more holes (not shown) of the document 88 in such a manner that any tampering will destroy the antenna 84 and render the tag 90 unreadable beyond a certain distance, thus signaling to the user that the document 88 has been tampered with.

Metalized thread based RFID tags can also be used as tamper-destruct seals for container caps. As shown in Fig. 19, an RFID tag 24 with an RFID IC 28 electrically connected with a metalized thread 30 is associated with a bottle by having the thread 30 fixedly connected to a breakable part of a cap 92 of the bottle. The opening of the cap 92 will break the metalized thread 30 and break the critical conductive path needed in the RFID tag 24, thus disabling the tag 24.

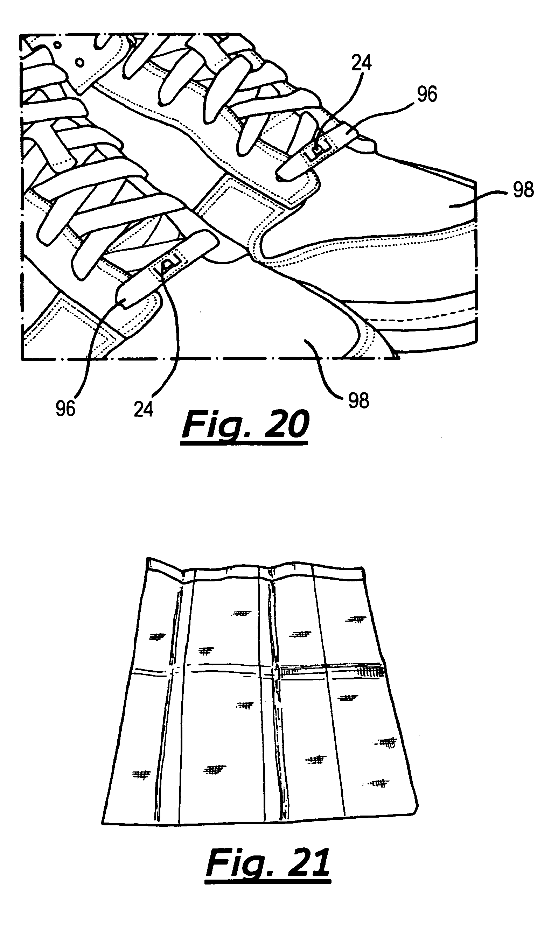

Metalized thread based RFID tags can also be applied to shoe lace for athletes or kids where their where about or sequence on the road need to be tracked or gauged. In particular, as shown in Fig. 20, a shoe lace 96 of each shoe 98 is sewn with an RFID tag 24. The metalized thread antennas of the tags 24 are sewn or woven into the shoe laces 96 of the shoes 98 so as to attach the RFID tag 24 to the respective shoe 98.

As shown in Fig. 21, metalized thread based RFID tag can also be applied to sack or bag made of cloth or linen or plastic fiber for industrial or agricultural use, so that the contents in the sack or bag can be tracked from the farm to the factory. In such a case, the centre part housing the flip chip RFID IC needs to be properly protected (e.g. being covered by a piece of hard plastic) to protect the IC from being damaged by weight or impact, and the metalized threads of the RFID tag are woven onto or into the sack or bag. A metalized film, either in dipole far field form or loop near field form, or both, may be provided to provide long range RFID read even when the goods inside the sack contains water or meat, or even metal.

In summary, metalized thread based RFID tags can be used in many aspects of our life and provide the necessary antenna structure for best and longest range RFID read in a most natural way of attachment or integration into our clothing wear and as a wearable device.

## Claims

1. A method of forming a tamper-destruct seal (82) for an object, said method includes providing at least one radio frequency identification, RFID, tag (90), wherein said RFID tag includes an integrated circuit (86) and at least one antenna (84) connected with said integrated circuit, wherein said at least one antenna is formed of an at least partly metalized thread, and associating said thread with said object, **characterized in that** said object is a document (88) and said thread of said RFID tag is positioned through at least one hole of said document.

2. A method according to Claim 1 wherein said at least partly metalized thread comprises a cotton or polyester thread with metallization on surface of said thread or integrated into said thread.

## Patentansprüche

1. Verfahren zum Ausbilden eines bei Manipulation kaputtgehenden Siegels (82) für ein Objekt, wobei das Verfahren einschließt: Bereitstellen mindestens eines Funkfrequenzidentifizierungs-(RFID-)Etiketts (90), worin das RFID-Etikett einen integrierten Schaltkreis (86) und mindestens eine mit dem integrierten Schaltkreis verbundene Antenne (84) aufweist, worin die mindestens eine Antenne aus einem zumindest teilweise metallisierten Faden gebildet ist, und Verbinden des Fadens mit dem Objekt, **dadurch gekennzeichnet, dass** das Objekt ein Dokument (88) ist und der Faden des RFID-Etiketts durch mindestens ein Loch des Dokuments positioniert wird.

2. Verfahren nach Anspruch 1, worin der zumindest teilweise metallisierte Faden einen Baumwoll- oder Polyesterfaden umfasst, und zwar mit Metallisierung auf der Oberfläche des Fadens oder in den Faden integriert.

## Revendications

1. Procédé de formation d'un sceau (82), qui se rompt en cas de manipulation, destiné à un objet, ledit procédé comportant la fourniture d'au moins une étiquette d'identification par radiofréquence, étiquette RFID (90), ladite étiquette RFID comportant un circuit intégré (86) et au moins une antenne (84) reliée audit circuit intégré, ladite au moins une antenne étant constituée d'un fil au moins partiellement métallisé, et l'association dudit fil audit objet, **caractérisé en ce que** ledit objet est un document (88) et ledit fil de ladite étiquette RFID est positionné à travers au moins un trou présent sur ledit document.

2. Procédé selon la revendication 1, dans lequel ledit fil au moins partiellement métallisé comprend un fil de coton ou de polyester pourvu d'une métallisation sur la surface dudit fil ou intégré dans ledit fil.
